# EUROPÄISCHE PATENTSCHRIFT

(11) **EP 1 973 739 B1**
(45) Veröffentlichungstag und Bekanntmachung des Hinweises auf die Patenterteilung: **13.05.2009**
(21) Anmeldenummer: 06830351.0
(22) Anmeldetag: 05.12.2006
(51) Int. Cl.: B41F 13/00, B41F 13/02, B41F 33/00, B41F 33/14, B65H 7/14, B65H 43/08, G01N 21/86

(54) **SYSTEM ZUR AUFNAHME EINES BILDES VON ZUMINDEST EINEM TEIL EINER OBERFLÄCHE EINES FLÄCHIGEN MATERIALS**
SYSTEM FOR RECORDING AN IMAGE FROM AT LEAST PART OF A SURFACE OF A SHEET-LIKE MATERIAL
SYSTEME D'ENREGISTREMENT D'UNE IMAGE D'AU MOINS UNE PARTIE DE LA SURFACE D'UN MATERIAU PLAT

(30) Priorität: 05.01.2006 DE 102006000866
(43) Veröffentlichungstag der Anmeldung: 01.10.2008
(73) Patentinhaber: Koenig & Bauer Aktiengesellschaft, 97080 Würzburg (DE)
(72) Erfinder: STÖBER, Bernd Rüdiger, 33378 Rheda-Wiedenbrück (DE)
(86) Internationale Anmeldenummer: PCT/EP2006/069301
(87) Internationale Veröffentlichungsnummer: WO 2007/077073

(56) Entgegenhaltungen:
- EP-A2- 0 742 171
- WO-A1-03/052394
- DE-A1- 10 135 010
- DE-A1- 19 939 165

## Beschreibung

Die Erfindung betrifft ein System zur Aufnahme einer Lichtreflexion von zumindest einem Teil einer Oberfläche eines flächigen Materials gemäß dem Oberbegriff des Anspruchs 1.

Durch die EP 15 79 994 A1 ist ein System zur Aufnahme eines Bildes von zumindest einem Teil einer Oberfläche eines flächigen Materials bekannt.

Die EP 0 146 917 A2 betrifft ein Verfahren zum Erkennen des Vorhandenseins von insbesondere flächigem Transportgut auf der Mantelfläche eines rotierenden Transportkörpers mit Hilfe einer einen Lichtsender und einen Lichtempfänger sowie eine Schaltungsanordnung zur Signalauswertung enthaltenden und nach dem Reflexionsprinzip arbeitenden lichtelektrischen Einheit, wobei der Lichtsender und der Lichtempfänger der lichtelektrischen Einheit stationär angeordnet sind und sowohl die Übertragung des vom Lichtsender ausgesandten Lichtstrahlenbündels hin zur Abtastzone als auch die Rückübertragung des reflektierten Anteils des Lichtstrahlenbündels von der Abtastzone zum Lichtempfänger hin auf optischem Weg mittels Lichtführung erfolgen.

Durch die DE 197 07 657 A1 sind eine Bogensensoranordnung für eine Bogendruckmaschine, die wenigstens eine hohlzylindrische Trommel enthält, die ein Greifersystem aufweist, um einzelne Bogen zu befördern und/oder zwischenzuspeichern, sowie ein Verfahren zur optischen Kontrolle von Bogen in einer solchen Druckmaschine bekannt. Die Bogensensoranordnung weist in der zylindrischen Wand der Trommel wenigstens eine Lichtdurchtrittsöffnung auf, wobei ein Bogensensor durch eine Lichtschranke gebildet wird, die einen Lichtstrahl aufweist, der in wenigstens einer Winkelposition der Trommel von innen auf die Lichtdurchtrittsöffnung gerichtet ist, wobei ein gebündelter Lichtstrahl beispielsweise von einem Laser erzeugt wird.

Durch die JP 59203907 A ist gleichfalls eine Bogensensoranordnung einer Bogen befördernden Maschine bekannt, die wenigstens eine hohlzylindrischen Zylinder enthält, der ein Greifersystem aufweist, um einzelne Bogen zu befördern, wobei mit einer Reflexlichtschranke ein Vorhandensein eines Bogens an der Mantelfläche des Zylinders geprüft wird, wobei Licht vom Inneren des Zylinders durch dessen Mantelfläche gegen den aufliegenden Bogen gesendet wird und ein an der Mantelfläche vorhandener Bogen Licht in das Innere des Zylinders reflektiert, wobei ein Lichtsender und ein Lichtempfänger stationär außerhalb des rotierenden Zylinders angeordnet sind und das jeweilige Licht im Inneren des Zylinders über Lichtleiter geführt ist.

Durch die EP 1 204 514 A1 ist ein Verfahren und eine Vorrichtung zur Verarbeitung von Blättern bekannt, wobei eine Zählscheibe eine Einrichtung zur Messung von Reflexion aufweist, wobei diese Einrichtung zur Durchführung einer Schnittkontrolle eine Fläche der Blätter abtastet.

Durch die DE 199 39 165 A1 ist eine Vorrichtung zur Verarbeitung von Blättern mit einer Zählvorrichtung bekannt, wobei ein Teil der Zählvorrichtung relativ zu einem Blatt bewegbar ist, wobei auf dem bewegten Teil der Zählvorrichtung ein Reflexion zumindest eines Teilbereiches des Blattes erfassender Empfänger angeordnet ist, wobei der Empfänger vorzugsweise als Lichtleiter ausgebildet ist und mittels Lichtleiter mit einem Sensor verbunden ist, wobei ein Verlauf des Signals des Sensors ein Maß für die Reflexion entlang des erfassten Teilbereiches des Blattes ist. Der Sensor arbeitet nach dem Prinzip eines optischen Reflextasters.

Durch die WO 03/052394 A1 ist eine Vorrichtung zur Kontrolle von Material mit einer Sensoreinrichtung, z. B. einer CCD-Kamera, und einer Beleuchtungseinrichtung bekannt, wobei das zu kontrollierende Material auf einer transparenten Trommel geführt ist, wobei die Beleuchtungseinrichtung auf einer Seite der Trommel und die Sensoreinrichtung auf der anderen Seite der Trommel angeordnet ist, wobei das Material ein zu kontrollierendes Druckbild aufweist, wobei die Beleuchtungseinrichtung innerhalb der Peripherie der Trommel und die zugehörige Sensoreinrichtung außerhalb der Peripherie der Trommel angeordnet ist. Diese Vorrichtung kontrolliert in einem Durchlichtverfahren die Transparenz des auf dem Material angeordneten Druckbildes. Mangels Lichtreflexion vom Druckbild zur Sensoreinrichtung ist diese Vorrichtung jedoch nicht geeignet, ein auf der Oberfläche des Materials angeordnetes Druckbild fotografisch abzubilden.

Durch die DE 101 35 010 A1 ist eine Anordnung mit einem ortsfesten photoelektrischen Detektor mit einem Lichtsender und mit mindestens einem Lichtempfänger bekannt, wobei das Licht des Lichtsenders auf die Oberfläche eines auf einem Transportband aufliegenden Druckproduktes gerichtet ist und der Lichtempfänger das von der Oberfläche remittierte Licht erfasst. Der Lichtsender enthält eine kohärentes Licht aussendende Lichtquelle, z. B. einen Laser. Der Lichtempfänger enthält ein die räumliche Verteilung des Streulichts aufnehmendes Element, z. B. eine CCD-Fläche oder CCD-Zeile. Durch die Beleuchtung eines Bereiches des Druckproduktes mit dem kohärenten Licht entsteht infolge der Rauhigkeit der Oberfläche des Druckproduktes eine charakteristische Grauwertverteilung in Form eines Musters aus hellen und dunklen Speckles-Punkten, einem so genannten Speckle-Streulicht-Muster. Der Lichtempfänger dient der Aufnahme eines derartigen Speckle-Bildes.

Durch die EP 0 742 171 B1 ist ein fotoelektrischer Detektor für eine Vorrichtung zur Registerregelung einer Bahn in einer Rotationsdruckmaschine bekannt, umfassend eine Reihe von Markenabtastvorrichtungen, welche gegenüber der Bahn quer zur Durchlaufrichtung angeordnet ist, wobei jede Abtastvorrichtung eine einzige optische Abtastfaser umfasst, die durch einen Leim von optischer Qualität mit ihrer eigenen Vorrichtung zur Bildfokussierung verbunden ist, wobei jede Abtastfaser das empfangene Licht zu einer entsprechenden Fotodiode führt, wobei jede Vorrichtung zur Bildfokussierung eine sphärische oder halbsphärische Linse ist. Der Detektor arbeitet nach dem Prinzip eines optischen Reflextasters.

Der Erfindung liegt die Aufgabe zugrunde, ein System zur Aufnahme einer Lichtreflexion von zumindest einem Teil einer Oberfläche eines flächigen Materials zu schaffen, wobei die Lichtreflexion ein Bild ist und das aufgenommene Bild diesen Teil der Oberfläche des flächigen Materials abbildet.

Die Aufgabe wird erfingdungsgemäß durch die Merkmale des Anspruchs 1 gelöst.

Die mit der Erfindung erzielbaren Vorteile bestehen insbesondere darin, dass an einer hinsichtlich eines bewegten Maschinenelementes festgelegten Position von zumindest einem Teil einer diesem Maschinenelement zugewandten Oberfläche eines flächigen Materials mit einem Bildsensor ein Bild aufgenommen werden kann, obwohl diese Oberfläche des flächigen Materials zumindest im Zeitpunkt der Bildaufnahme der Oberfläche des bewegten Maschinenelementes zugewandt ist. Somit ist auch die ansonsten verdeckte, der Oberfläche des bewegten Maschinenelementes zugewandte Oberfläche des flächigen Materials einer bildgebenden optischen Abtastung zugänglich. Dabei steht die Oberfläche des flächigen Materials mit der Oberfläche des bewegten Maschinenelementes vorzugsweise in einem Berührungskontakt. Unter einem Bild und der zugehörigen Bildaufnahme wird hier stets eine fotografische, möglichst verzerrungsfreie und damit naturgetreue optische Abbildung verstanden, hier im Konkreten einer Abbildung der Oberfläche des flächigen Materials oder zumindest eines Teils derselben.

Des Weiteren ist es von Vorteil, dass es die hier vorgeschlagene Lösung vermeidet, den vorzugsweise optoelektronischen Bildsensor im Inneren des bewegten Maschinenelementes anzuordnen, da eine Anordnung dieses Bildsensors innerhalb des bewegten Maschinenelementes einerseits aus Platzgründen konstruktiv schwierig sein kann und andererseits eine Übertragung elektrischer Energie zur Versorgung des Bildsensors sowie insbesondere eine Übertragung von Bilddaten des Bildsensors an eine vom bewegten Maschinenelement räumlich getrennte Datenverarbeitungseinheit nicht unproblematisch ist, denn Bilddaten beinhalten i. d. R. größere Datenmengen, die durchaus im Bereich mehrerer Megabyte liegen können und die zudem z. B. für ihre Verwertung in einem Steuerungskonzept in Echtzeit über eine z. B. drehbewegliche Schnittstelle zu transportieren wären. Für den Zweck der Übertragung von Energie und Daten eingesetzte Schleifkontakte sind jedoch z. B. Verschleiß unterworfen, weshalb sich die Übertragung von Energie und Daten zum bzw. vom bewegten Maschinenelement als solche als störanfällig und/oder als nicht ausreichend zuverlässig erweisen kann. Die hier vorgeschlagene Lösung vermeidet diese Probleme, da sie für die Bildübertragung innerhalb des bewegten Maschinenelementes nur eine optische und keine elektromechanische Übertragungsstrecke vorsieht.

Ferner ist es von Vorteil, dass mit der hier vorgeschlagenen Lösung eine Kantenlage des flächigen Materials z. B. in Relation zu einer hinsichtlich des bewegten Maschinenelementes festgelegten Position erfassbar ist. Auch ist eine Lage einer Markierung und/oder eines Druckmotivs auf der Oberfläche des flächigen Materials in Relation zur erfassten Kantenlage des flächigen Materials kontrollierbar. Die Erfassung einer Kantenlage des flächigen Materials und/oder die Erfassung und/oder Kontrolle der Lage einer Markierung und/oder eines Druckmotivs auf der Oberfläche des flächigen Materials resultiert aus einer die jeweiligen Bilddaten elektronisch auswertenden Bildauswertung, wobei das Ergebnis dieser Bildauswertung vorteilhaft zur Steuerung oder Regelung eines Schnittregisters z. B. in einer das Material weiterverarbeitenden Einrichtung genutzt werden kann.

Ausführungsbeispiele der Erfindung sind in den Zeichnungen dargestellt und werden im Folgenden näher beschrieben.

Es zeigen:
- Fig. 1: ein System zur Aufnahme eines Bildes von einer Oberfläche eines flächigen Materials mit Blick auf eine Stirnseite des Rotationskörpers;
- Fig. 2: dasselbe System wie in der Fig. 1 in einer Vorderansicht;
- Fig. 3: ein System zur Aufnahme eines Bildes von einer Oberfläche eines flächigen Materials mit einem scheibenförmig ausgebildeten bewegten Maschinenelement;
- Fig. 4: ein System zur Aufnahme eines Bildes von einer Oberfläche eines flächigen Materials mit einem getrennten Verlauf von Bildübertragungsstrecke und Lichtübertragungsstrecke.

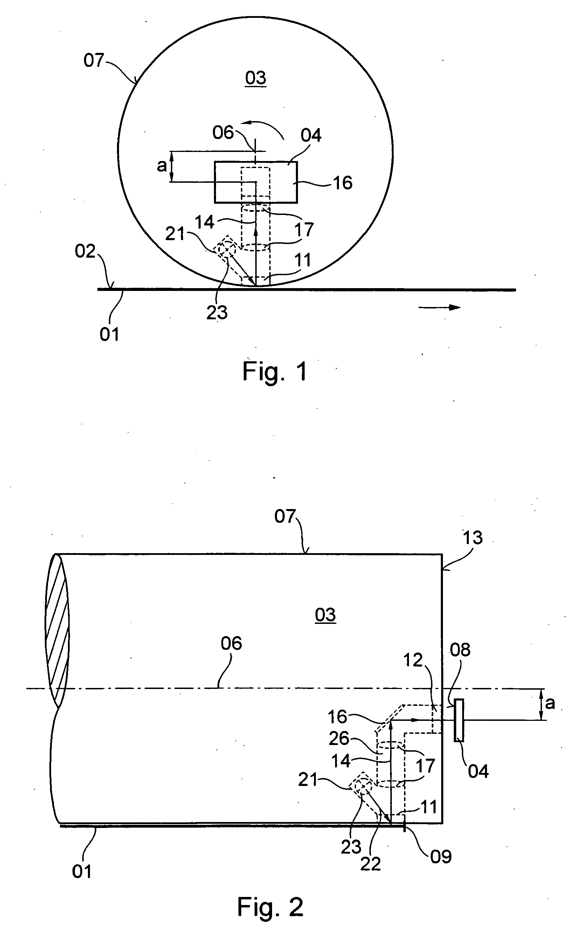

Die Fig. 1 und 2 zeigen in einer Prinzipskizze jeweils dasselbe System zur Aufnahme eines fotografischen Bildes von zumindest einem Teil einer Oberfläche 02 eines flächigen Materials 01. Fig. 1 zeigt dieses System mit Blick auf eine Stirnseite des Rotationskörpers 03, Fig. 2 in einer Vorderansicht. Dieses System zur Aufnahme des Bildes von zumindest einem Teil der Oberfläche 02 des flächigen Materials 01 ist z. B. Bestandteil eines in einer Druckmaschine angeordneten Inspektionssystems, d. h. eines Inline-Inspektionssystems, welches in einem laufenden Druckprozess zum Zweck der Überprüfung der Qualität eines mit dieser Druckmaschine produzierten Druckerzeugnisses wiederholt jeweils mindestens ein Bild von zumindest einem Teil der Oberfläche 02 des flächigen Materials 01, d. h. eines zu verarbeitenden Materials 01, vorzugsweise eines Bedruckstoffes 01, insbesondere eines Druckbogens 01 oder einer Materialbahn 01, aufnimmt, wobei das Material 01 z. B. aus Papier, Pappe, Karton oder aus einer Folie, insbesondere einer Kunststofffolie, bestehen kann, wobei das Material 01 die Druckmaschine in dem Druckprozess durchläuft. Die Druckmaschine ist z. B. als eine Rotationsdruckmaschine ausgebildet. In der bevorzugten Ausführung ist die Druckmaschine als eine Bogenrotationsdruckmaschine ausgebildet, die eine Vielzahl von Druckbogen in einem Offsetdruckverfahren sequentiell mehrfarbig mit mehreren Druckmotiven bedruckt.

In einer Rotationsdruckmaschine bildet ein Rotationskörper 03, z. B. ein Zylinder 03, insbesondere ein Druckwerkszylinder 03, oder eine Walze 03, z. B. eine den Bedruckstoff fördernde oder leitende Walze 03, ein bewegtes Maschinenelement 03, dessen Bewegung in der Fig. 1 durch einen Richtungspfeil angedeutet ist, wobei an einer hinsichtlich dieses bewegten Maschinenelementes 03 festgelegten Position ein von dem bewegten Maschinenelement 03 räumlich getrennt angeordneter Bildsensor 04 das Bild aufnimmt. Der das Bild aufnehmende Bildsensor 04 ist zudem auch außerhalb eines von einer Oberfläche 07 an der Außenseite des bewegten Maschinenelementes 03 umschlossenen Raumes und damit z. B. nicht im Inneren des z. B. rotationssymmetrisch ausgebildeten bewegten Maschinenelementes 03 angeordnet. Die Bewegung des bewegten Maschinenelementes 03 ist vorzugsweise eine Rotationsbewegung um eine in Axialrichtung des Maschinenelementes 03 gerichtete Rotationsachse 06 dieses Maschinenelementes 03. Die mit dem Bildsensor 04 abzubildende Oberfläche 02 des flächigen Materials 01 und die Oberfläche 07 an der Außenseite des bewegten Maschinenelementes 03 sind zumindest im Zeitpunkt der Bildaufnahme einander zugewandt, wobei in dem Fall der Ausbildung des Maschinenelementes 03 als Zylinder 03 dessen Mantelfläche 07 der mit dem Bildsensor 04 abzubildenden Oberfläche 02 des flächigen Materials 01 zugewandt ist, wobei zumindest die dem flächigen Materials 01 zugewandte Oberfläche 07 des Maschinenelementes 03, z. B. dessen Mantelfläche 07, aus einem festen Werkstoff starr ausgebildet ist. Die Oberfläche 07 an der Außenseite des Maschinenelementes 03 besteht vorzugsweise aus einem Metall, einem Kunststoff oder einer Keramik. Vorzugsweise steht das flächige Material 01 zumindest im Zeitpunkt der Bildaufnahme mit seiner Oberfläche 02 mit der Oberfläche 07 des bewegten Maschinenelementes 03 in einem Berührungskontakt, indem zumindest der abzubildende Teil des flächigen Materials 01 z. B. entweder auf der Mantelfläche 07 des Rotationskörpers 03 aufliegt oder zumindest an einem Teil der Oberfläche 07 des Rotationskörpers 03 entlang geführt wird. Eine Transportrichtung des bewegten flächigen Materials 01 ist in der Fig. 1 durch einen Richtungspfeil angedeutet. Die Oberfläche 02 des flächigen Materials 01 ist vorzugsweise zumindest im Zeitpunkt der Bildaufnahme hinsichtlich der Oberfläche 07 des bewegten Maschinenelementes 03 fixiert, z. B. führt das bewegte Maschinenelement 03 das flächige Material 01 im Zeitpunkt der Bildaufnahme. Es kann jedoch zwischen der Oberfläche 02 des flächigen Materials 01 und der Oberfläche 07 des bewegten Maschinenelementes 03 auch eine Relativbewegung bestehen, wenn sich das flächige Material 01 und die Oberfläche 07 des bewegten Maschinenelementes 03 zumindest an der hinsichtlich dieses bewegten Maschinenelementes 03 festgelegten Position jeweils mit voneinander verschiedenen Geschwindigkeiten bewegen, wobei die hinsichtlich dieses bewegten Maschinenelementes 03 festgelegte Position z. B. eine bestimmte Winkellage dieses bewegten Maschinenelementes 03 betreffen kann.

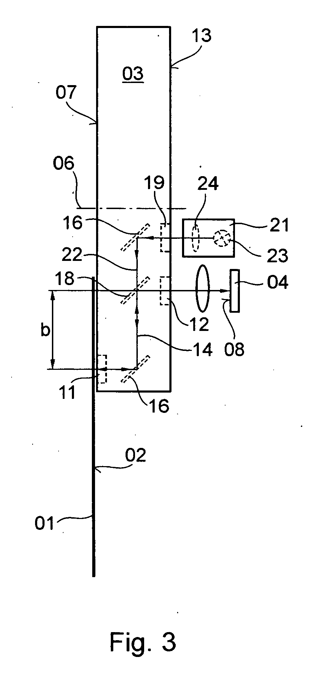

Als Alternative zum Zylinder 03 kann das bewegte Maschinenelement 03 auch als ein kreisförmiger, flacher Rotationskörper, z. B. als eine um die Rotationsachse 06 rotierende Scheibe 03, ausgebildet sein, wie es in der Fig. 3 dargestellt ist, wobei die Scheibe 03 nicht notwendigerweise einen rechteckförmigen Querschnitt aufweisen muss, sondern z. B. auch Freiformflächen aufweisen kann. Ungeachtet der geometrischen Ausgestaltung des bewegten Maschinenelementes 03 verlaufen die Oberfläche 07 des bewegten Maschinenelementes 03, an welcher die Bildaufnahme ausgeführt wird, und zumindest der abzubildende Teil der Oberfläche 02 des flächigen Material 01 vorzugsweise parallel zueinander. Wie die Fig. 3 zeigt, kann die Oberfläche 07 des bewegten Maschinenelementes 03, an welcher die Bildaufnahme ausgeführt wird, auch z. B. eine Stirnseite des bewegten Maschinenelementes 03 sein. Eine derartige Scheibe 03 kann z. B. als eine Zählscheibe ausgebildet sein, wobei eine Zählscheibe z. B. im Bereich einer Wertpapiere verarbeitenden Maschine eingesetzt wird und insbesondere in einer Zähl- und/oder Prüfeinrichtung für Wertpapiere, insbesondere für Banknoten angeordnet ist. Dabei greift die Zählscheibe sukzessive z. B. zwischen ein zu einem Bündel zusammengefasste Banknoten, wobei die einzelnen Banknoten nacheinander in der in der Fig. 3 gezeigten Weise zur Scheibe 03 angeordnet sind. Während des Überstreichens der Scheibe 03 von zumindest einem Teil der Oberfläche 02 der jeweiligen Banknote, welche das zu prüfende flächige Material 01 bildet, kann mit dem erfindungsgemäßen System eine Lage z. B. eines Druckmotivs zu mindestens einer Kante der jeweiligen Banknote geprüft werden, wodurch die Prüfung eines Schnittregisters ermöglicht wird.

Der das Bild aufnehmende Bildsensor 04 ist vorzugsweise als ein optoelektronischer Bildsensor 04 ausgebildet, z. B. als ein zeilenförmiger oder flächiger Bildsensor 04, z. B. in CCD- oder CMOS-Technologie, wobei eine das Bild aufnehmende Wirkfläche 08 des Bildsensors 04 vorzugsweise orthogonal zur Rotationsachse 06 des Maschinenelementes 03 angeordnet ist (Fig. 2). Der Bildsensor 04 ist außerhalb des bewegten Maschinenelementes 03, d. h. räumlich getrennt von dem bewegten Maschinenelement 03, z. B. in einem radialen Abstand a von der Rotationsachse 06 des Maschinenelementes 03 ortsfest angeordnet. Es kann vorgesehen sein, dass der Bildsensor 04 an der hinsichtlich des bewegten Maschinenelementes 03 festgelegten Position aufeinanderfolgend mehrere Bilder von der Oberfläche 02 des flächigen Materials 01 aufnimmt, was insbesondere dann eine vorteilhafte Ausgestaltung ist, wenn sich das flächige Material 01 und die Oberfläche 07 des bewegten Maschinenelementes 03 jeweils mit voneinander verschiedenen Geschwindigkeiten bewegen. In diesem letzteren Fall ist z. B. eine Vergleichseinrichtung vorgesehen, der die Bilddaten des Bildsensors 04 zugeleitet werden und welche dann die Bilddaten von mindestens zwei aufeinanderfolgend aufgenommenen Bildern miteinander vergleicht und aus diesem Vergleich einen Schlupf zwischen der Oberfläche 02 des flächigen Materials 01 und der Oberfläche 07 des bewegten Maschinenelementes 03 ermittelt, wobei der ermittelte Schlupf wiederum dazu genutzt werden kann, die Rotationsbewegung des bewegten Maschinenelementes 03 zu steuern oder zu regeln. Beispielsweise kann eine insbesondere auf die Rotationsbewegung des bewegten Maschinenelementes 03 wirkende Steuerung oder Regelung vorgesehen sein, die den Schlupf zwischen der Oberfläche 02 des flächigen Materials 01 und der Oberfläche 07 des bewegten Maschinenelementes 03 minimiert oder zumindest innerhalb vorgegebener Toleranzgrenzen hält.

Ferner erfasst der Bildsensor 04 z. B. eine Kante 09 der Oberfläche 02 des flächigen Materials 01 und/oder eine Markierung und/oder ein Druckmotiv auf der Oberfläche 02 des flächigen Materials 01. Der Bildsensor 04 kann damit einen flächigen Ausschnitt aus der Oberfläche 02 des flächigen Materials 01 und/oder einen bestimmten informatorischen Inhalt aus der vom Bildsensor 04 abgebildeten Oberfläche 02 des flächigen Materials 01 erfassen. Es kann eine die Bilddaten des Bildsensors 04 auswertende Auswerteeinrichtung vorgesehen sein, welche aus einer Lage der erfassten Markierung und/oder des erfassten Druckmotivs relativ zu der erfassten Kante 09 der Oberfläche 02 des flächigen Materials 01 ein für ein Schneiden des flächigen Materials 01 relevantes Schnittregister ermittelt, wobei anhand des Schnittregisters z. B. eine auf das flächige Material 01 einwirkende Schneideinrichtung und/oder Perforiereinrichtung gesteuert wird. Beispielsweise kann anhand dieser Steuerung ein mehrere Nutzen aufweisender Druckbogen 01 vereinzelt werden. Der von der Oberfläche 02 des flächigen Materials 01 erfasste Teil oder Ausschnitt kann z. B. in Form eines Streifens oder - im Fall einer Relativbewegung zwischen der Oberfläche 02 des flächigen Materials 01 und der Oberfläche 07 des bewegten Maschinenelementes 03 - einer über die Oberfläche 02 verlaufenden geradlinigen oder gekrümmten Spur ausgebildet sein, wobei insbesondere die vom bewegten Maschinenelement 03 bei seiner Rotation überstrichene Spur z. B. zwei zueinander orthogonale Kanten der Oberfläche 02 des flächigen Materials 01 schneidet.

Das bewegte Maschinenelement 03 weist an seiner dem flächigen Material 01 zugewandten Oberfläche 07 eine erste Öffnung 11 auf, durch welche der Bildsensor 04 an der hinsichtlich des bewegten Maschinenelementes 03 festgelegten Position das Bild von der Oberfläche 02 des flächigen Materials 01 aufnimmt. Die erste Öffnung 11 ist z. B. als ein an der Mantelfläche 07 des Rotationskörpers 03 angeordnetes Abtastfenster 11 ausgebildet, durch welches der außerhalb des Rotationskörpers 03 ortsfest angeordnete Bildsensor 04 bei einer bestimmten Winkellage des Rotationskörpers 03 mindestens ein Bild von einem Teil der Oberfläche 02 des Bedruckstoffes 01 aufnimmt, wobei dieser als Bild abgebildete Teil der Oberfläche 02 des Bedruckstoffes 01 ein Abtastfeld bildet. Diese erste Öffnung 11 kann einen in der Ebene der Oberfläche 07 des Rotationskörpers 03 liegenden Querschnitt beliebiger Geometrie aufweisen, also z. B. rund oder eckig ausgebildet sein. Die Oberfläche 07 des Rotationskörpers 03 ist vorzugsweise opak ausgebildet, sodass eine das Innere des Rotationskörpers 03 durchdringende Abbildung der Oberfläche 02 des flächigen Materials 01 nicht an einer beliebigen Stelle der Oberfläche 07 des Rotationskörpers 03, sondern nur an der Position der ersten Öffnung 11 möglich ist. Die der Oberfläche 02 des flächigen Materials 01 zugewandte Oberfläche 07 des Rotationskörpers 03 bildet mit Ausnahme ihrer ersten Öffnung 11 eine vorzugsweise geschlossene Auflage oder Unterlage für diese Oberfläche 02 des flächigen Materials 01, von der zumindest teilweise ein Bild aufzunehmen ist. Die erste Öffnung 11 unterbricht die Oberfläche 07 des Maschinenelementes 03 an einer bestimmten, hinsichtlich der Oberfläche 07 des Maschinenelementes 03 festgelegten Position, welche einen Durchblickpunkt für das zu übertragende Bild bildet. Da es bei der ersten Öffnung 11 nur auf die Übertragungsfähigkeit des von der Oberfläche 02 des flächigen Materials 01 aufzunehmenden Bildes durch die Oberfläche 07 des Maschinenelementes 03 hindurch ankommt, kann diese erste Öffnung 11 in der ansonsten vorzugsweise homogen ausgebildeten Oberfläche 07 des Maschinenelementes 03 zum Schutz z. B. vor Staub und/oder Feuchtigkeit mit einer Abdeckung aus einem für die Bildübertragung transparenten Werkstoff verschlossen sein.

Innerhalb des bewegten Maschinenelementes 03 ist zwischen der ersten Öffnung 11 an der dem flächigen Material 01 zugewandten Oberfläche 07 des Maschinenelementes 03 und einer an einer dem Bildsensor 04 zugewandten Seite 13 des Maschinenelementes 03 angeordneten zweiten Öffnung 12 eine Bildübertragungsstrecke 14 vorzugsweise in Form eines von Wänden eingefassten Hohlkörpers 26 oder Kanals 26 ausgebildet, wobei sich die Wände entlang der Bildübertragungsstrecke 14 erstrecken. Die Wände des Hohlkörpers 26 oder Kanals 26 sind vorzugsweise opak und z. B. aus dem Werkstoff des Maschinenelementes 03 gebildet. In einer alternativen Ausgestaltung könnte die Bildübertragungsstrecke 14 durch einen vorzugsweise flexiblen Bildleiter z. B. in Form eines optisch leitenden Faserbündels realisiert sein.

Die dem Bildsensor 04 zugewandte Seite 13 des Maschinenelementes 03 ist z. B. eine Stirnseite 13 des Rotationskörpers 03. Die zweite Öffnung 12 bildet somit für das von der Oberfläche 02 des Materials 01 aufzunehmende Bild ein Austrittsfenster 12, wobei das Austrittsfenster 12 der vorzugsweise eben ausgebildeten Wirkfläche 08 des Bildsensors 04 zugewandt ist. Die Wirkfläche 08 des Bildsensors 04 und die Querschnittsfläche des Austrittsfensters 12 sind damit vorzugsweise im Wesentlichen parallel zueinander angeordnet. Vorzugsweise ist entlang der Bildübertragungsstrecke 14, z. B. in dem als Hohlkörper 26 ausgebildeten Kanal 26, mindestens eine optische Einrichtung 16; 17; 18 angeordnet, wobei die optische Einrichtung 16; 17; 18 z. B. als ein Spiegel 16, ein Prisma 16 oder als eine Linse 17 oder als ein Linsensystem 17 ausgebildet ist. Innerhalb der Bildübertragungsstrecke 14 kann auch z. B. zusätzlich zu mindestens einer anderen optischen Einrichtung 16; 17 mindestens ein halbdurchlässiger Spiegel 18 als eine weitere optische Einrichtung 18 angeordnet sein. Der halbdurchlässige Spiegel 18 kann innerhalb oder außerhalb des bewegten Maschinenelementes 03 angeordnet sein. Die Spiegel 16; 18 können z. B. derart angeordnet sein, dass sie den Verlauf der Bildübertragungsstrecke 14 um jeweils z. B. 90° umlenken, wobei z.B. zwei Umlenkungen einen entgegengesetzten Drehsinn aufweisen, wobei sich der Verlauf der Bildübertragungsstrecke 14 zumindest vom Abtastfenster 11 an der Mantelfläche 07 des Rotationskörpers 03 bis zum zur Wirkfläche 08 des Bildsensors 04 gerichteten Austrittsfenster 12 erstreckt, wobei das Abtastfenster 11 an der Mantelfläche 07 des Rotationskörpers 03 und das zur Wirkfläche 08 des Bildsensors 04 gerichtete Austrittsfenster 12 in ihrer jeweiligen Anordnung im bewegten Maschinenelement 03 mit Bezug auf die Rotationsachse 06 dieses Maschinenelementes 03 einen radialen Versatz b aufweisen (Fig. 3). Das Linsensystem 17 kann z. B. sowohl eine Linse 17 zur Projektion eines erfassten Bildes auf der Wirkfläche 08 des Bildsensors 04 als auch eine Linse 17 für eine Zwischenabbildung umfassen. Die Linse 17 zur Projektion eines erfassten Bildes auf der Wirkfläche 08 des Bildsensors 04 kann innerhalb der Bildübertragungsstrecke 14 auch außerhalb des bewegten Maschinenelementes 03 angeordnet sein (Fig. 3). Die optischen Einrichtungen 16; 17; 18 sind vorzugsweise durch eine Beschichtung oder durch ihre konstruktive Gestaltung derart ausgebildet, dass sie keine störenden Reflexionen auf die Wirkfläche 08 des Bildsensors 04 leiten. Die gegebenenfalls diverse optische Einrichtungen 16; 17; 18 aufweisende Bildübertragungsstrecke 14 ist damit ein das bewegte Maschinenelement 03 durchdringender Bildübertragungskanal, welcher in seinem Streckenverlauf mindestens eine Abwinkelung von z. B. 90° oder auch zwei gegenläufige Abwinkelungen von z. B. jeweils 90° aufweist, wobei ein von der Oberfläche 02 des flächigen Materials 01 aufgenommenes Bild durch diesen Bildübertragungskanal hindurch auf dem außerhalb des z. B. rotierenden Maschinenelementes 03 ortsfest angeordneten Bildsensor 04 möglichst verzerrungsfrei fotografisch abgebildet wird.

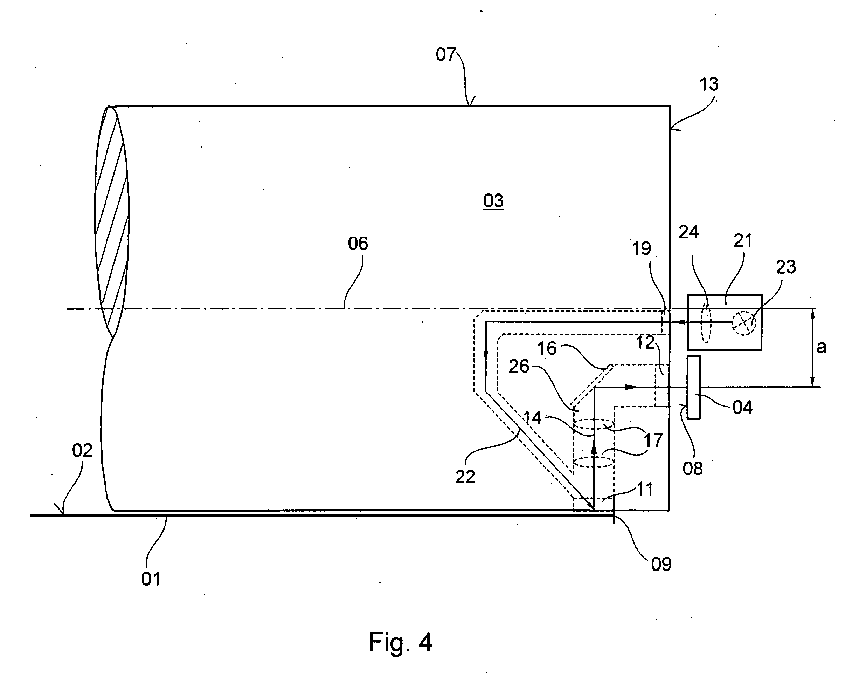

Vorzugsweise ist an der dem Bildsensor 04 zugewandten Seite 13 des Maschinenelementes 03 eine dritte Öffnung 19 ausgebildet, durch welche eine außerhalb des bewegten Maschinenelementes 03 vorzugsweise ortsfest angeordnete Beleuchtungseinrichtung 21 Licht in das bewegte Maschinenelement 03 einspeist, um das Abtastfeld auf der Oberfläche 02 des Materials 01 zur Durchführung der Bildaufnahme auszuleuchten (Fig. 3). Die Beleuchtungseinrichtung 21 kann eine Vielzahl von einzelnen Lichtquellen 23 z. B. in Form von Leuchtdioden (LED's) sowie eine Fokussiereinrichtung 24 aufweisen. Innerhalb des bewegten Maschinenelementes 03 ist zwischen der das Licht in das Maschinenelement 03 einspeisenden dritten Öffnung 19 und der ersten Öffnung 11 an der dem flächigen Material 01 zugewandten Seite 13 des Maschinenelementes 03 z. B. eine Lichtübertragungsstrecke 22 ausgebildet, wobei die Lichtübertragungsstrecke 22 entlang eines Lichtleiters geführt sein kann. Die Bildübertragungsstrecke 14 und die Lichtübertragungsstrecke 22 können zumindest teilweise zueinander parallel ausgebildet sein, z. B. auch denselben Streckenverlauf nehmen (Fig. 3). Alternativ kann die vorzugsweise als Lichtleiter ausgebildete Lichtübertragungsstrecke 22 von der Bildübertragungsstrecke 14 getrennt angeordnet sein (Fig. 2), wobei die Beleuchtungseinrichtung 21 innerhalb oder außerhalb des bewegten Maschinenelementes 03 angeordnet sein kann (Fig. 4). Die Bildübertragungsstrecke 14 und die Lichtübertragungsstrecke 22 können vorzugsweise durch den halbdurchlässigen Spiegel 18 einander überlagert werden. Der halbdurchlässige Spiegel 18 kann außerhalb des bewegten Maschinenelementes 03 in Zuordnung zum feststehenden Bildsensor 04 angeordnet sein.

In einer anderen Ausführungsvariante ist, wie in den Fig. 1 und 2 dargestellt, eine Beleuchtungseinrichtung 21 innerhalb des bewegten Maschinenelementes 03 angeordnet, wobei die innerhalb des bewegten Maschinenelementes 03 angeordnete Beleuchtungseinrichtung 21 ihr Licht durch die erste Öffnung 11 des Maschinenelementes 03 auf die Oberfläche 02 des flächigen Materials 01 emittiert.

Das System zur Aufnahme eines Bildes von zumindest einem Teil einer Oberfläche 02 eines flächigen Materials 01 ist somit ein Abbildungssystem, welches die Oberfläche 02 des flächigen Materials 01 zumindest teilweise abbildet und das aufgenommene Bild an einen außerhalb des bewegten Maschinenelementes 03 ortsfest angeordneten Bildsensor 04 mittels einer im Wesentlichen innerhalb des bewegten Maschinenelementes 03 angeordneten Bildübertragungsstrecke 14 überträgt. Die Abbildung erfolgt z. B. im Zyklus der Rotationsbewegung des bewegten Maschinenelementes 03, z. B. nach jeder Umdrehung des Rotationskörpers 03. Die Oberfläche 02 des flächigen Materials 01 kann aber auch für eine gewisse Zeit während der Rotationsbewegung des bewegten Maschinenelementes 03 auf der Oberfläche 07 des bewegten Maschinenelementes 03 fixiert sein, sodass für die Abbildung der Oberfläche 02 des flächigen Materials 01 ein gewisser Zeitraum während der Bewegung des bewegten Maschinenelementes 03 zur Verfügung steht, wobei dieser Zeitraum zumindest von der Dauer des Berührungskontaktes des bewegten Maschinenelementes 03 mit dem flächigen Material 01 und/oder von der Geschwindigkeit des bewegten Maschinenelementes 03 abhängig ist. In der Bildübertragungsstrecke 14 können zur Unterstützung der Abbildung des jeweiligen Teils der Oberfläche 02 des flächigen Materials 01 eine oder mehrere optische Einrichtungen 16; 17; 18 angeordnet sein, wobei die optischen Einrichtungen 16; 17; 18 in dem im Inneren des bewegten Maschinenelementes 03 ausgebildeten Kanal 26 vorzugsweise starr angeordnet und mit dem bewegten Maschinenelement 03 zumindest während dessen Bewegung vorzugsweise fest verbunden sind. Die optischen Einrichtungen 16; 17; 18 können dafür sorgen, dass das durch das Abtastfenster 11 von der Oberfläche 02 des flächigen Materials 01 aufzunehmende Bild auf der Wirkfläche 08 des Bildsensors 04 seitenrichtig (und nicht gedreht) und/oder möglichst verzerrungsfrei abgebildet wird.

Insbesondere, wenn das System zur Aufnahme des Bildes von zumindest einem Teil der Oberfläche 02 des flächigen Materials 01 ein Bestandteil eines Inspektionssystems ist, ist es vorteilhaft, die Bildübertragungsstrecke 14 und/oder die Lichtübertragungsstrecke 22 im Inneren des bewegten Maschinenelementes 03 mehrfach auszubilden, und zwar vorzugsweise derart, dass die Bildübertragungsstrecke 14 und/oder die Lichtübertragungsstrecke 22 entlang des Umfangs des bewegten Maschinenelementes 03 jeweils voneinander beabstandet mehrfach ausgebildet sind, vorzugsweise in einer äquidistanten Anordnung, sodass mit dem einen außerhalb des bewegten Maschinenelementes 03 ortsfest angeordneten Bildsensor 04 bei jeder Umdrehung des bewegten Maschinenelementes 03 mehrmals jeweils ein Bild von zumindest einem Teil der Oberfläche 02 des flächigen Materials 01 aufgenommen werden kann. Beispielsweise sind die Bildübertragungsstrecke 14 und/oder die Lichtübertragungsstrecke 22 entlang des Umfangs des bewegten Maschinenelementes 03 in dessen Innerem sechsfach ausgebildet, wobei alle sechs Bildübertragungsstrecken 14 und/oder Lichtübertragungsstrecken 22 jeweils mit demselben einen außerhalb des bewegten Maschinenelementes 03 ortsfest angeordneten Bildsensor 04 zusammenwirken, wobei während jeder Umdrehung des bewegten Maschinenelementes 03 nacheinander insgesamt sechs Bilder von unterschiedlichen Stellen der Oberfläche 02 des flächigen Materials 01 aufgenommen werden.

### Bezugszeichenliste

- 01: Material, Bedruckstoff, Druckbogen, Materialbahn
- 02: Oberfläche
- 03: Maschinenelement, Rotationskörper, Zylinder, Druckwerkszylinder, Walze, Scheibe
- 04: Bildsensor
- 05: -
- 06: Rotationsachse
- 07: Oberfläche, Mantelfläche
- 08: Wirkfläche
- 09: Kante
- 10: -
- 11: erste Öffnung, Abtastfenster
- 12: zweite Öffnung, Austrittsfenster
- 13: Seite, Stirnseite
- 14: Bildübertragungsstrecke
- 15: -
- 16: optische Einrichtung, Spiegel, Prisma
- 17: optische Einrichtung, Linse, Linsensystem
- 18: optische Einrichtung, halbdurchlässiger Spiegel
- 19: dritte Öffnung
- 20: -
- 21: Beleuchtungseinrichtung
- 22: Lichtübertragungsstrecke
- 23: Lichtquelle
- 24: Fokussiereinrichtung
- 25: -
- 26: Hohlkörper, Kanal
- a: Abstand
- b: Versatz

## Patentansprüche

1. System zur Aufnahme einer Lichtreflexion von zumindest einem Teil einer Oberfläche (02) eines flächigen Materials (01), wobei ein Lichtempfänger (04) vorgesehen ist, mittels welchem die Lichtreflexion an einer hinsichtlich eines um eine Rotationsachse (06) bewegbaren Maschinenelementes (03) festgelegten Position aufnehmbar ist, wobei der Teil der Oberfläche (02) des flächigen Materials (01), von dem die Lichtreflexion vom Lichtempfänger (04) aufnehmbar ist, zumindest im Zeitpunkt der Aufnahme der Lichtreflexion der Oberfläche (07) des bewegbaren Maschinenelementes (03) zugewandt ist, wobei der die Lichtreflexion aufnehmende Lichtempfänger (04) außerhalb eines von einer Oberfläche (07) an der Außenseite des bewegbaren Maschinenelementes (03) umschlossenen Raumes sowie getrennt von dem bewegbaren Maschinenelement (03) angeordnet ist, wobei der Lichtempfänger (04) eine orthogonal zur Rotationsachse (06) des Maschinenelementes (03) gerichtete Wirkfläche (08) aufweist, wobei das bewegbare Maschinenelement (03) an seiner dem flächigen Material (01) zugewandten Oberfläche (07) eine erste Öffnung (11) aufweist, durch welche die Lichtreflexion vom Lichtempfänger (04) an der hinsichtlich des bewegbaren Maschinenelementes (03) festgelegten Position von der Oberfläche (02) des flächigen Materials (01) aufnehmbar ist, wobei innerhalb des bewegbaren Maschinenelementes (03) zwischen dessen erster Öffnung (11) und einer zweiten Öffnung (12) an seiner dem Lichtempfänger (04) zugewandten Oberfläche (13) eine Übertragungsstrecke (14) zur Übertragung der Lichtreflexion zum Lichtempfänger (04) ausgebildet ist, **dadurch gekennzeichnet, dass** der Lichtempfänger (04) ein Bildsensor (04) ist, wobei der Bildsensor (04) als ein CCD-Bildsensor oder als ein CMOS-Bildsensor ausgebildet ist, wobei das mit dem Bildsensor (04) aufgenommene Bild eine fotografische, naturgetreue optische Abbildung dieses Teils der Oberfläche (02) des flächigen Materials (01) ist, wobei die innerhalb des bewegbaren Maschinenelementes (03) angeordnete Übertragungsstrecke (14) zur Übertragung der Lichtreflexion als eine die Abbildung verzerrungsfrei übertragende Bildübertragungsstrecke (14) ausgebildet ist, wobei die Bildübertragungsstrecke (14) in Form eines Hohlkörpers (26) oder Kanals (26) ausgebildet ist, wobei von dem Bildsensor (04) eine Markierung und/oder ein Druckmotiv auf der Oberfläche (02) des flächigen Materials (01) erfassbar ist.

2. System nach Anspruch 1, **dadurch gekennzeichnet, dass** das bewegbare Maschinenelement (03) als ein Rotationskörper (03) ausgebildet ist.

3. System nach Anspruch 1, **dadurch gekennzeichnet, dass** das bewegbare Maschinenelement (03) als ein Zylinder (03) ausgebildet ist.

4. System nach Anspruch 1, **dadurch gekennzeichnet, dass** das bewegbare Maschinenelement (03) als eine rotierende Scheibe (03) ausgebildet ist.

5. System nach Anspruch 1, **dadurch gekennzeichnet, dass** zwischen dem flächigen Material (01) und dem bewegbaren Maschinenelement (03) zumindest im Zeitpunkt der Bildaufnahme ein Berührungskontakt herstellbar ist.

6. System nach Anspruch 1, **dadurch gekennzeichnet, dass** der Bildsensor (04) ortsfest angeordnet ist.

7. System nach Anspruch 1, **dadurch gekennzeichnet, dass** innerhalb der Bildübertragungsstrecke (14) mindestens eine optische Einrichtung (16; 17; 18) angeordnet ist.

8. System nach Anspruch 7, **dadurch gekennzeichnet, dass** die mindestens eine optische Einrichtung (16; 17; 18) in dem im Inneren des bewegbaren Maschinenelementes (03) ausgebildeten Hohlkörper (26) oder Kanal (26) angeordnet ist.

9. System nach Anspruch 7, **dadurch gekennzeichnet, dass** die optische Einrichtung (16; 17; 18) als ein Spiegel (16), als ein Prisma (16), als eine Linse (17) oder als ein Linsensystem (17) ausgebildet ist.

10. System nach Anspruch 1, **dadurch gekennzeichnet, dass** innerhalb der Bildübertragungsstrecke (14) mindestens ein halbdurchlässiger Spiegel (18) angeordnet ist.

11. System nach Anspruch 1, **dadurch gekennzeichnet, dass** an der dem Bildsensor (04) zugewandten Oberfläche (13) des Maschinenelementes (03) eine dritte Öffnung (19) ausgebildet ist, durch welche mit einer außerhalb des bewegbaren Maschinenelementes (03) angeordneten Beleuchtungseinrichtung (21) Licht in das bewegbare Maschinenelement (03) einspeisbar ist.

12. System nach Anspruch 11, **dadurch gekennzeichnet, dass** innerhalb des bewegbaren Maschinenelementes (03) zwischen der das Licht in das Maschinenelement (03) einspeisenden dritten Öffnung (19) und der ersten Öffnung (11) an der dem flächigen Material (01) zugewandten Oberfläche (07) des Maschinenelementes (03) eine Lichtübertragungsstrecke (22) ausgebildet ist.

13. System nach Anspruch 12, **dadurch gekennzeichnet, dass** die Bildübertragungsstrecke (14) und die Lichtübertragungsstrecke (22) zumindest teilweise zueinander parallel ausgebildet sind.

14. System nach Anspruch 12, **dadurch gekennzeichnet, dass** die Bildübertragungsstrecke (14) und die Lichtübertragungsstrecke (22) voneinander getrennt ausgebildet sind.

15. System nach Anspruch 12, **dadurch gekennzeichnet, dass** die Lichtübertragungsstrecke (22) entlang eines Lichtleiters geführt ist.

16. System nach Anspruch 1, **dadurch gekennzeichnet, dass** eine Beleuchtungseinrichtung (21) innerhalb des bewegbaren Maschinenelementes (03) angeordnet ist.

17. System nach Anspruch 16, **dadurch gekennzeichnet, dass** von der innerhalb des bewegbaren Maschinenelementes (03) angeordneten Beleuchtungseinrichtung (21) Licht durch die erste Öffnung (11) des Maschinenelementes (03) auf die Oberfläche (02) des flächigen Materials (01) emittierbar ist.

18. System nach Anspruch 1, **dadurch gekennzeichnet, dass** die Oberfläche (02) des flächigen Materials (01) und die Oberfläche (07) des bewegbaren Maschinenelementes (03) relativ zueinander bewegbar sind.

19. System nach Anspruch 1, **dadurch gekennzeichnet, dass** von dem Bildsensor (04) an der hinsichtlich des bewegbaren Maschinenelementes (03) festgelegten Position aufeinanderfolgend mehrere Bilder von der Oberfläche (02) des flächigen Materials (01) aufnehmbar sind.

20. System nach Anspruch 19, **dadurch gekennzeichnet, dass** eine Vergleichseinrichtung vorgesehen ist, welche mindestens zwei der aufeinanderfolgend aufgenommenen Bilder miteinander vergleicht und aus dem Vergleich einen Schlupf zwischen der Oberfläche (02) des flächigen Materials (01) und der Oberfläche (07) des bewegbaren Maschinenelementes (03) ermittelt.

21. System nach Anspruch 1, **dadurch gekennzeichnet, dass** die Oberfläche (02) des flächigen Materials (01) zumindest im Zeitpunkt der Bildaufnahme hinsichtlich der Oberfläche (07) des bewegbaren Maschinenelementes (03) fixiert ist.

22. System nach Anspruch 1, **dadurch gekennzeichnet, dass** von dem Bildsensor (04) eine Kante (09) der Oberfläche (02) des flächigen Materials (01) erfassbar ist.

23. System nach Anspruch 22, **dadurch gekennzeichnet, dass** eine Auswerteeinrichtung vorgesehen ist, welche aus einer Lage der erfassten Markierung und/oder des erfassten Druckmotivs relativ zu der erfassten Kante (09) der Oberfläche (02) des flächigen Materials (01) ein für ein Schneiden des flächigen Materials (01) relevantes Schnittregister ermittelt.

24. System nach Anspruch 12, **dadurch gekennzeichnet, dass** die Bildübertragungsstrecke (14) und/oder die Lichtübertragungsstrecke (22) entlang des Umfangs des bewegbaren Maschinenelementes (03) in dessen Innerem mehrfach ausgebildet sind.

25. System nach Anspruch 24, **dadurch gekennzeichnet, dass** alle Bildübertragungsstrecken (14) und/oder Lichtübertragungsstrecken (22) jeweils mit demselben außerhalb des bewegbaren Maschinenelementes (03) ortsfest angeordneten Bildsensor (04) zusammenwirken.

26. System nach Anspruch 1, **dadurch gekennzeichnet, dass** das bewegbare Maschinenelement (03) an seiner dem flächigen Material (01) zugewandten Oberfläche (07) aus einem festen Werkstoff besteht.

27. System nach Anspruch 1, **dadurch gekennzeichnet, dass** die Oberfläche (07) des Maschinenelementes (03) aus einem Metall, einem Kunststoff oder einer Keramik besteht.

28. System nach Anspruch 1, **dadurch gekennzeichnet, dass** die Oberfläche (07) des Maschinenelementes (03) opak ausgebildet ist.

29. System nach Anspruch 1, **dadurch gekennzeichnet, dass** die der Oberfläche (02) des flächigen Materials (01) zugewandte Oberfläche (07) des Maschinenelementes (03) mit Ausnahme ihrer ersten Öffnung (11) geschlossen ist.

30. System nach Anspruch 1, **dadurch gekennzeichnet, dass** es in einer Druckmaschine angeordnet ist.

31. System nach Anspruch 1, **dadurch gekennzeichnet, dass** es Bestandteil eines Inspektionssystems ist.

32. System nach Anspruch 1, **dadurch gekennzeichnet, dass** das bewegbare Maschinenelement (03) als eine Zählscheibe ausgebildet ist.

33. System nach Anspruch 32, **dadurch gekennzeichnet, dass** die Zählscheibe in einer Zähl- und/oder Prüfeinrichtung für Wertpapiere angeordnet ist.

## Claims

1. System for recording a light reflection from at least a part of a surface (02) of a sheet-like material (01), a light receiver (04) being provided, by means of which the light reflection can be recorded at a position specified with respect to a machine element (03) moveable about an axis of rotation (06), that part of the surface (02) of the sheet-like material (01) from which the light reflection can be recorded by the light receiver (04) facing the surface (07) of the moveable machine element (03) at least at the time of recording of the light reflection, the light receiver (04) recording the light reflection being arranged outside a space enclosed by a surface (07) on the outside of the moveable machine element (03) and separated from the moveable machine element (03), the light receiver (04) having an effective surface (08) directed orthogonally to the axis of rotation (06) of the machine element (03), the moveable machine element (03) having, on its surface (07) facing the sheet-like material (01), a first opening (11) through which the light reflection can be recorded from the surface (02) of the sheet-like material (01) by the light receiver (04) at the position specified with respect to the moveable machine element (03), a transmission zone (14) for transmitting the light reflection to the light receiver (04) being formed within the moveable machine element (03), between the first opening (11) thereof and a second opening (12) on its surface (13) facing the light receiver (04), **characterized in that** the light receiver (04) is an image sensor (04), the image sensor (04) being in the form of a CCD image sensor or in the form of a CMOS image sensor, the image recorded by the image sensor (04) being a photographic optical image, true to nature, of this part of the surface (02) of the sheet-like material (01), the transmission zone (14) arranged within the moveable machine element (03) being in the form of an image transmission zone (14) transmitting the image without distortion, for transmission of the light reflection, the image transmission zone (14) being in the form of a hollow body (26) or a channel (26), a mark and/or a print motif on the surface (02) of the sheet-like material (01) being detectable by the image sensor (04).

2. System according to Claim 1, **characterized in that** the moveable machine element (03) is in the form of a rotational body (03).

3. System according to Claim 1, **characterized in that** the moveable machine element (03) is in the form of a cylinder (03).

4. System according to Claim 1, **characterized in that** the moveable machine element (03) is in the form of a rotating disc (03).

5. System according to Claim 1, **characterized in that** a contact point can be produced between the sheet-like material (01) and the moveable machine element (03), at least at the time of image recording.

6. System according to Claim 1, **characterized in that** the image sensor (04) is arranged in a fixed position.

7. System according to Claim 1, **characterized in that** at least one optical device (16; 17; 18) is arranged within the image transmission zone (14).

8. System according to Claim 7, **characterized in that** the at least one optical device (16; 17; 18) is arranged in the hollow body (26) or channel (26) formed in the interior of the moveable machine element (03).

9. System according to Claim 7, **characterized in that** the optical device (16; 17; 18) is in the form of a mirror (16), in the form of a prism (16), in the form of a lens (17) or in the form of a lens system (17).

10. System according to Claim 1, **characterized in that** at least one semitransparent mirror (18) is arranged within the image transmission zone (14).

11. System according to Claim 1, **characterized in that** a third opening through which light can be fed into the moveable machine element (03) by an illumination device (21) arranged outside the moveable machine element (03) is formed on that surface (13) of the machine element (03) which faces the image sensor (04).

12. System according to Claim 11, **characterized in that** a light transmission zone (22) is formed within the moveable machine element (03), between the third opening (19) feeding the light into the machine element (03) and the first opening (11) on that surface (07) of the machine element (03) facing the sheet-like material (01).

13. System according to Claim 12, **characterized in that** the image transmission zone (14) and the light transmission zone (22) are formed at least partly parallel to one another.

14. System according to Claim 12, **characterized in that** the image transmission zone (14) and the light transmission zone (22) are formed separately from one another.

15. System according to Claim 12, **characterized in that** the light transmission zone (22) is led along an optical waveguide.

16. System according to Claim 1, **characterized in that** an illumination device (21) is arranged within the moveable machine element (03).

17. System according to Claim 16, **characterized in that** light can be emitted from the illumination device (21) arranged within the moveable machine element (03) through the first opening (11) of the machine element (03) onto the surface (02) of the sheet-like material (01).

18. System according to Claim 1, **characterized in that** the surface (02) of the sheet-like material (01) and the surface (07) of the moveable machine element (03) are moveable relative to one another.

19. System according to Claim 1, **characterized in that** a plurality of images can be recorded in succession from the surface (02) of the sheet-like material (01) by the image sensor (04) at the position specified with respect to the moveable machine element.

20. System according to Claim 19, **characterized in that** a comparison device is provided which compares at least two of the images recorded in succession with one another and determines from the comparison a slip between the surface (02) of the sheet-like material (01) and the surface (07) of the moveable machine element (03).

21. System according to Claim 1, **characterized in that** the surface (02) of the sheet-like material (01) is fixed relative to the surface (07) of the moveable machine element (03), at least at the time of image recording.

22. System according to Claim 1, **characterized in that** an edge (09) of the surface (02) of the sheet-like material (01) is detectable by the image sensor (04).

23. System according to Claim 22, **characterized in that** an evaluation device is provided which determines a crop mark relevant for cutting the sheet-like material (01) from a position of the detected mark and/or of the detected print motif relative to the detected edge (09) of the surface (02) of the sheet-like material (01).

24. System according to Claim 12, **characterized in that** the image transmission zone (14) and/or the light transmission zone (22) are formed multiply along the circumference of the moveable machine element (03), in the interior thereof.

25. System according to Claim 24, **characterized in that** all image transmission zones (14) and/or light transmission zones (22) cooperate in each case with the same image sensor (04) arranged in a fixed manner outside the moveable machine element (03).

26. System according to Claim 1, **characterized in that** the moveable machine element (03) consists of a solid material on its surface (07) facing the sheet-like material (01).

27. System according to Claim 1, **characterized in that** the surface (07) of the machine element (03) consists of a metal, a plastic or a ceramic.

28. System according to Claim 1, **characterized in that** the surface (07) of the machine element (03) is opaque.

29. System according to Claim 1, **characterized in that** the surface (07) of the machine element (03) which faces the surface (02) of the sheet-like material (01) is closed with the exception of its first opening (11).

30. System according to Claim 1, **characterized in that** it is arranged in a printing press.

31. System according to Claim 1, **characterized in that** it is part of an inspection system.

32. System according to Claim 1, **characterized in that** the moveable machine element (03) is in the form of a counting disc.

33. System according to Claim 32, **characterized in that** the counting disc is arranged in a counting and/or testing device for securities.

## Revendications

1. Système d'enregistrement d'une réflexion lumineuse émanant d'au moins une partie d'une surface (02) d'un matériau (01) plat, un photorécepteur (04) étant prévu, au moyen duquel la réflexion de lumière, en une position fixée du point de vue d'un élément de machine (03) déplaçable autour d'un axe de rotation (06), peut être enregistrée, la partie de la surface (02) du matériau (01) plat, dont la réflexion lumineuse peut être enregistrée par le photorécepteur (04), au moins au moment de l'enregistrement de la réflexion lumineuse, étant tournée vers la surface (07) de l'élément de machine (03) déplaçable, le photorécepteur (04), enregistrant la réflexion lumineuse, étant disposé à l'extérieur d'un espace entouré par une surface (07) sur la face extérieure de l'élément de machine (03) déplaçable, ainsi que disposé séparément de l'élément de machine (03) déplaçable, le photorécepteur (04) présentant une face active (08), orientée perpendiculairement à l'axe de rotation (06) de l'élément de machine (03), l'élément de machine (03) déplaçable présentant, sur sa surface (07) tournée vers le matériau (01) plat, une première ouverture (11), à travers laquelle la réflexion lumineuse peut être enregistrée par le photorécepteur (04), à la position fixée du point de vue de l'élément de machine (03) déplaçable, par la surface (02) du matériau (01) plat, sachant que, à l'intérieur de l'élément de machine (03) déplaçable, entre sa première ouverture (11) et une deuxième ouverture (12), sur sa surface (13) tournée vers le photorécepteur (04), est réalisée un chemin de transmission (14), pour la transmission de la réflexion lumineuse au photorécepteur (04), **caractérisé en ce que** le photorécepteur (04) est un capteur d'images (04), le capteur d'images (04) étant réalisé sous forme de capteur d'images CCD ou de capteur d'images CMOS, l'image enregistrée avec le capteur d'images (04) étant une représentation photographique, optique, très fidèle, de cette partie de la surface (02) du matériau (01) plat, le chemin de transmission (14), disposé à l'intérieur de l'élément de machine (03) déplaçable, étant réalisé pour transmission de la réflexion lumineuse, sous forme d'un chemin de transmission (14) transmettant la représentation sans distorsion, le chemin de transmission (14) étant réalisé sous la forme d'un corps creux (26) ou canal (26), un marquage et/ou un motif d'impression, appliqué sur la surface (02) du matériau (01) plat, étant susceptible d'être détecté par le capteur d'images (04).

2. Système selon la revendication 1, **caractérisé en ce que** l'élément de machine (03) déplaçable est réalisé sous la forme d'un corps de rotation (03).

3. Système selon la revendication 1, **caractérisé en ce que** l'élément de machine (03) déplaçable est réalisé sous la forme d'un cylindre (03).

4. Système selon la revendication 1, **caractérisé en ce que** l'élément de machine (03) déplaçable est réalisé sous la forme d'un disque rotatif (03).

5. Système selon la revendication 1, **caractérisé en ce qu'**un point de contact est susceptible d'être établi, au moins au moment de l'enregistrement d'image, entre le matériau (01) plat et l'élément de machine (03) déplaçable.

6. Système selon la revendication 1, **caractérisé en ce que** le capteur d'images (04) est disposé de façon localement fixe.

7. Système selon la revendication 1, **caractérisé en ce qu'**au moins un dispositif optique (16 ; 17 ; 18) est disposé à l'intérieur du chemin de transmission d'images (14).

8. Système selon la revendication 7, **caractérisé en ce que** le au moins un dispositif optique (16 ; 17 ; 18) est disposé dans le corps creux (26) ou canal (26), réalisé à l'intérieur de l'élément de machine (03) déplaçable.

9. Système selon la revendication 7, **caractérisé en ce que** le dispositif optique (16 ; 17 ; 18) est réalisé sous la forme d'un miroir (16), sous la forme d'un prisme (16), sous la forme d'une lentille (17), ou sous la forme d'un système à lentilles (17).

10. Système selon la revendication 1, **caractérisé en ce qu'**au moins un miroir (18) semi-réfléchissant est disposé à l'intérieur du chemin de transmission d'images (14).

11. Système selon la revendication 1, **caractérisé en ce que** sur la surface (13), tournée vers le capteur d'images (04), de l'élément de machine (03) déplaçable est réalisée une troisième ouverture (19), à travers laquelle, avec un dispositif d'éclairage (21) disposé à l'extérieur de l'élément de machine (03) déplaçable, de la lumière peut être introduite dans l'élément de machine (03) déplaçable.

12. Système selon la revendication 11, **caractérisé en ce que**, à l'intérieur de l'élément de machine (03) déplaçable, entre la troisième ouverture (19), introduisant de la lumière dans l'élément de machine (03), et la première ouverture 11, sur la surface (07), tournée vers le matériau (01) plat, de l'élément de machine (03), est réalisé un chemin de transmission de lumière (22).

13. Système selon la revendication 12, **caractérisé en ce que** le chemin de transmission (14) et le chemin de transmission de lumière (22) sont réalisés de façon au moins partiellement parallèle l'un à l'autre.

14. Système selon la revendication 12, **caractérisé en ce que** le chemin de transmission (14) et le chemin de transmission de lumière (22) sont réalisés de façon séparée l'un de l'autre.

15. Système selon la revendication 12, **caractérisé en ce que** le chemin de transmission de lumière (22) est guidé le long d'un guide d'onde optique.

16. Système selon la revendication 1, **caractérisé en ce qu'**un dispositif d'éclairage (21) est disposé à l'intérieur de l'élément de machine (03) déplaçable.

17. Système selon la revendication 16, **caractérisé en ce que** de la lumière est susceptible d'être émise par le dispositif d'éclairage (21) disposé à l'intérieur de l'élément de machine (03) déplaçable, sur la surface (02) du matériau (01) plat, en passant à travers la première ouverture (11) de l'élément de machine (03).

18. Système selon la revendication 1, **caractérisé en ce que** la surface (02) du matériau (01) plat et la surface (07) de l'élément de machine (03) déplaçable sont déplaçables l'une par rapport à l'autre.

19. Système selon la revendication 1, **caractérisé en ce que** plusieurs images, se suivant à la position fixée du point de vue de l'élément de machine (03) déplaçable, de la surface (02) du matériau (01) plat, sont susceptibles d'être enregistrées par le capteur d'images (04).

20. Système selon la revendication 19, **caractérisé en ce qu'**est prévu un dispositif comparateur, qui compare entre elles au moins deux des images enregistrées les unes à la suite des autres, et déterminé, à partir de la comparaison un glissement entre la surface (02) du matériau (01) plat et la surface (07) de l'élément de machine (03) déplaçable.

21. Système selon la revendication 1, **caractérisé en ce que** la surface (02) du matériau (01) plat, au moins au moment de l'enregistrement d'image, est fixée par rapport à la surface (07) de l'élément de machine (03) déplaçable.

22. Système selon la revendication 1, **caractérisé en ce qu'**un bord (09) de la surface (02) du matériau (01) plat est susceptible d'être détecté par le capteur d'images (04).

23. Système selon la revendication 22, **caractérisé en ce qu'**est prévu un dispositif évaluateur qui, à partir d'une position du marquage détecté et/ou du motif d'impression détecté par rapport au bord (9) détecté de la surface (02) du matériau (01) plat, détermine un repérage de coupe important pour un découpage du matériau (01) plat.

24. Système selon la revendication 12, **caractérisé en ce que** le chemin de transmission (14) et/ou le chemin de transmission de lumière (22) sont réalisés en plusieurs exemplaires, le long de la périphérie de l'élément de machine (03) déplaçable, à l'intérieur de celui-ci.

25. Système selon la revendication 24, **caractérisé en ce que** tous les chemins de transmission d'image (14) et/ou chemins de transmission de lumière (22) coopèrent chacun avec le même capteur d'images (04), disposé de façon localement fixe à l'extérieur de l'élément de machine (03) déplaçable.

26. Système selon la revendication 1, **caractérisé en ce que** l'élément de machine (03) déplaçable est composé, sur sa surface (07) tournée vers le matériau (01) plat, d'un matériau solide.

27. Système selon la revendication 1, **caractérisé en ce que** la surface (07) de l'élément de machine (03) est composée d'un métal, d'une matière synthétique ou d'une céramique.

28. Système selon la revendication 1, **caractérisé en ce que** la surface (07) de l'élément de machine (03) est rendue opaque.

29. Système selon la revendication 1, **caractérisé en ce que** la surface (07), tournée vers la surface (02) du matériau (01) plat, de l'élément de machine (03) est fermée, à l'exception de sa première ouverture (11).

30. Système selon la revendication 1, **caractérisé en ce qu'**il est disposé dans une machine à imprimer.

31. Système selon la revendication 1, **caractérisé en ce qu'**il fait partie d'un système d'inspection.

32. Système selon la revendication 1, **caractérisé en ce que** l'élément de machine (03) déplaçable est réalisé sous la forme d'un disque de comptage.

33. Système selon la revendication 32, **caractérisé en ce que** le disque de comptage est disposé dans un dispositif de comptage ou de contrôle pour des papiers-valeur.
